# FASCICULE DE BREVET EUROPEEN

(11) **EP 3 324 338 B1**
(45) Date de publication et mention de la délivrance du brevet: **30.03.2022**
(21) Numéro de dépôt: 17203124.7
(22) Date de dépôt: 22.11.2017
(51) Int. Cl.: G06F 16/78, G06K 9/00

(54) **PROCÉDÉ D'INDEXATION DE VIDÉOS, ET PROCÉDÉ DE RECHERCHE D'UNE SÉQUENCE VIDÉO DANS UNE BASE DE VIDÉOS**
INDEXIERUNGSVERFAHREN FÜR VIDEOS, UND SUCHVERFAHREN EINER VIDEOSEQUENZ IN EINER VIDEODATENBANK
METHOD FOR VIDEO INDEXING, AND METHOD FOR SEARCHING VIDEO SEQUENCE IN A VIDEO DATABASE

(30) Priorité: 22.11.2016 FR 1601652
(43) Date de publication de la demande: 23.05.2018
(73) Titulaire: Thales, 92400 Courbevoie (FR)
(72) Inventeur: LOUIS, Christian, 78141 VELIZY CEDEX (FR); BERGIA, Yannick, 78141 VELIZY CEDEX (FR); SPERY, Laurent, 78141 VELIZY CEDEX (FR); VARENNE, Serge, 78141 VELIZY CEDEX (FR); VILLET, Julien, 78141 VELIZY CEDEX (FR)
(74) Mandataire: Lavoix

(56) Documents cités:
- US-A1- 2015 178 320
- US-A1- 2016 337 718
- BOURY-BRISSET A-C ED - SZCZEPANSKI PAWEL ET AL: "Toward unified query processing for ISR information needs and collection management", PROCEEDINGS VOLUME 9025 IS&T/SPIE ELECTRONIC IMAGING | 2-6 FEBRUARY 2014 INTELLIGENT ROBOTS AND COMPUTER VISION XXXI: ALGORITHMS AND TECHNIQUES, SPIE, US, vol. 9831, 12 mai 2016 (2016-05-12), pages 98310D-98310D, XP060070033, ISSN: 0277-786X, DOI: 10.1117/12.2230236

## Description

La présente invention concerne un procédé d'indexation d'une vidéo prise depuis une caméra mobile, la vidéo étant formée d'une collection de trames comprenant chacune une date et une information de prise de vue.

Le procédé d'indexation est destiné à indexer des vidéos produites par des capteurs en mouvement à des fins de renseignement, par exemple pour la vidéosurveillance ou le renseignement militaire d'origine image en vue de recherches faites ultérieurement par des analystes d'images. Par exemple, ce procédé d'indexation peut être utilisé pour indexer des vidéos prises par un drone.

Dans le cas de vidéos d'observation réalisées par des drones, l'exploitation de ces vidéos se fait le plus souvent dans des situations d'urgence où il convient d'extraire au plus vite des séquences pertinentes avec une consommation minimale de bande passante entre l'installation de stockage des vidéos et le poste de visualisation et d'analyse de la vidéo. En particulier, ce procédé peut être utilisé pour indexer et analyser des vidéos de très longue durée, typiquement d'une durée d'une vingtaine d'heures, à partir desquelles on cherche à isoler des séquences vidéo pertinentes.

Des solutions existent pour indexer des vidéos pour permettre la recherche de séquences d'intérêt. En particulier, il est connu d'utiliser une indexation portant sur la date et certaines informations de prise de vue accompagnant des vidéos d'une base de données pour faciliter des recherches ultérieures. Un exemple d'une telle technique est divulgué par le document US2015/178320. Néanmoins ces solutions nécessitent que, lors d'une recherche, des séquences vidéo soient téléchargées dans leur totalité pour déterminer si elles contiennent bien le lieu recherché. Cela implique une forte utilisation de la bande passante entre l'installation de stockage des vidéos et le poste de visualisation et d'analyse de la vidéo. De plus certaines vidéos, bien que satisfaisant les critères de dates et de lieu, sont parfois de faible qualité et donc difficilement interprétables, nécessitant alors la transmission d'une autre vidéo et donc également une consommation additionnelle de bande passante.

Il existe donc un besoin pour améliorer le procédé d'indexation de vidéos tout en permettant une faible utilisation de la bande passante lors d'une recherche dans une base indexée selon ce procédé.

A cet effet, l'invention a pour objet un procédé d'indexation du type précité caractérisé en ce que le procédé comprend pour chaque trame :
- une étape de sélection de la date de la trame par un module de sélection d'un calculateur d'un serveur
- une étape d'extraction d'un lieu de la trame à partir de l'information de prise de vue de la trame par un module de détermination du calculateur du serveur
- une étape d'affectation d'une interprétabilité à la trame par un module de calcul d'une interprétabilité du calculateur du serveur, l'interprétabilité d'une trame étant définie pour chaque trame, étant calculée par une fonction autonome de calcul à partir d'indices radiométriques et géométriques de la trame et étant une valuer parmi une plage de valeurs et
- une étape de génération d'un fichier de métadonnées distinct de la vidéo, comprenant pour chacune des trames de la vidéo, la date, le lieu et l'interprétabilité de la trame, et étant configuré pour être interrogé par une requête comprenant au moins un critère portant sur au moins l'un de la date, le lieu et l'interprétabilité.

Suivant d'autres aspect avantageux de l'invention, le procédé d'indexation d'une vidéo comprend une ou plusieurs des caractéristiques suivantes, prises isolément ou suivant toute combinaison possible :
- l'étape d'extraction du lieu comprend :
   - une sous-étape de détermination des positions relatives des trames les unes par rapport aux autres par suivi de la trajectoire de points de liaison des trames ; et
   - une sous-étape de recalcul des informations de prise de vue affinées de chacune des trames dans un repère monde, à partir des positions relatives des trames entre elles et des informations de prise de vue de chaque trame ;
- l'étape d'extraction du lieu comprend :
   - la sélection éventuelle de la trame en tant que trame clé et si la trame est une trame clé :
   - une sous-étape de sélection de l'information de prise de vue de la trame clé ; et
   - une sous-étape de recalcul d'une information de prise de vue améliorée dans un repère de terrain à partir de l'information de prise de vue de la trame par comparaison du contenu de la trame et d'un ensemble d'images géolocalisées issu d'un tapis de référence indépendant de la vidéo référencée ;
- l'étape d'extraction du lieu comprend :
   - une sous étape d'identification de points d'appui dans les trames clés de la vidéo ;
   - une sous étape de recherche des coordonnées, dans un repère terrain, des points d'appui des trames clés ayant une information de prise de vue améliorée ;
   - une sous étape de recherche des coordonnées, dans le repère monde, des points d'appui des trames clés ayant une information de prise de vue améliorée ;
   - une sous étape de calcul d'une fonction de basculement à partir des coordonnées des points d'appui des trames clés dans le repère terrain et dans le repère monde ; et
   - une sous étape de détermination du lieu dans un repère terrain à partir d'informations de prise de vue finales obtenues par application de la fonction de basculement aux informations de prise de vue affinées ;
- l'étape d'affectation de l'interprétabilité des trames comprend une sous-étape de calcul d'une fonction d'évaluation de l'interprétabilité, la fonction s'appliquant à des indices radiométriques et géométriques des trames de la vidéo ;
- l'étape d'affectation de l'interprétabilité comprend en outre :
   - une sous-étape de collecte d'au moins une interprétabilité perçue, saisie par au moins un opérateur, et
   - une sous-étape de recalcul de la fonction d'évaluation à partir de la fonction calculée par la sous-étape de calcul, et d'au moins une interprétabilité perçue par au moins un opérateur pour au moins une séquence vidéo.

L'invention concerne également un procédé de recherche de séquences vidéo contenues dans des vidéos, les vidéos étant indexées selon le procédé d'indexation précité, le procédé de recherche comprenant :
- une étape de création d'une requête comprenant au moins un critère portant sur au moins l'un de la date, le lieu et l'interprétabilité ;
- une étape de recherche dans les fichiers de métadonnées associés à la vidéo, des trames de la vidéo satisfaisant le ou chaque critère, et
- une étape de mise à disposition d'au moins une ou plusieurs séquences vidéo reconstituées chacune à partir de trames contigües temporellement satisfaisant le ou chaque critère au cours de l'étape de recherche.

Selon une variante, le procédé de recherche comporte en outre une étape de mise à disposition d'au moins une combinaison d'au moins deux séquences vidéo reconstituées.

Enfin, l'invention concerne un programme d'ordinateur comportant des instructions logicielles qui, lorsqu'elles sont mises en œuvre par un calculateur, mettent en œuvre le procédé d'indexation et/ou le procédé de recherche précités.

D'autres caractéristiques et avantages de l'invention apparaîtront à la lecture de la description qui suit de modes de réalisation de l'invention, donnée à titre d'exemple uniquement et en référence aux dessins dans lesquels :
- la figure 1 est une représentation schématique d'une architecture mettant en œuvre le procédé d'indexation selon l'invention appliqué à des données collectées par un porteur mobile, et mettant en œuvre le procédé de recherche selon l'invention ;
- la figure 2 est une représentation schématique des moyens de mise en œuvre de l'étape d'extraction d'un lieu du procédé d'indexation selon l'invention ;
- les figure 3 et 4 sont des organigrammes de fonctionnement du procédé d'indexation selon l'invention ; et
- la figure 5 est un organigramme de fonctionnement du procédé de recherche selon l'invention.

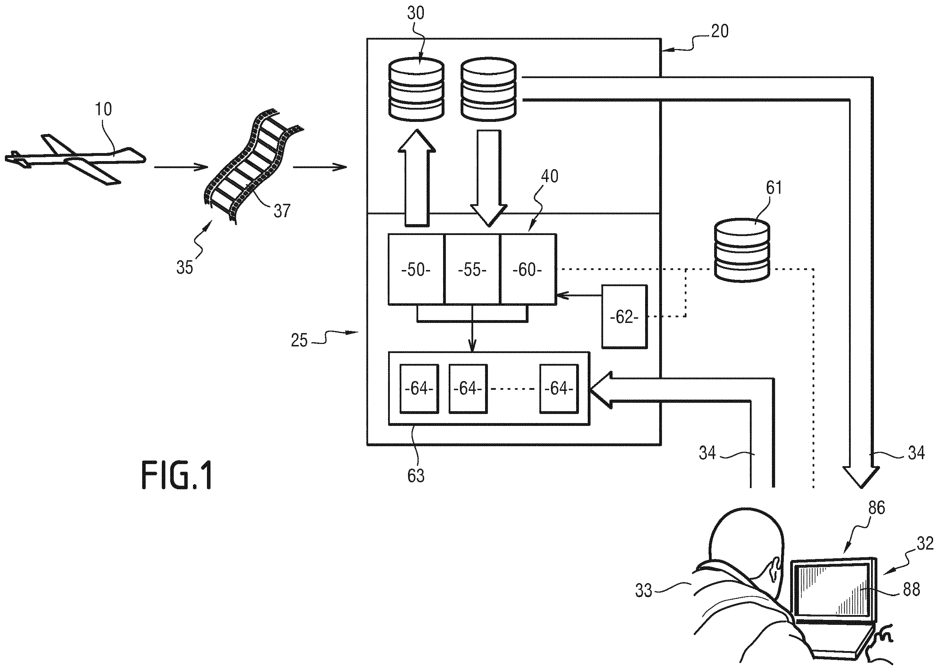

Sur la figure 1, un porteur mobile tel qu'un drone 10 est muni d'une caméra propre à collecter des vidéos lors d'une phase de vol.

Un centre de données 20 au sol comprend un serveur 25 et un disque de stockage 30. Selon une variante, le serveur 25 et le disque de stockage 30 sont localisés dans deux sites physiquement séparés.

Le centre de données 20 est relié avec un terminal d'interrogation 32 de type client léger manipulé par un opérateur 33 au travers d'un réseau de communication 34.

Les vidéos 35 collectées par le drone sont formées comme connues en soi de trames 37 qui contiennent chacune une date et une information de prise de vue propre à chaque trame de la vidéo.

Les vidéos collectées sont par exemple au format STANAG 4609.

Chaque vidéo 35 définit une collection de trames 37 (ou images), chaque trame comportant une information de prise de vue. L'information de prise de vue d'une trame 37 comprend par exemple, la localisation des quatre coins de la trame 37 (latitude, longitude) et du centre image. L'information de prise de vue comprend aussi la localisation et l'orientation du capteur au moment de la prise de vue de chaque trame.

Chaque trame 37 comprend également une information géométrique de trame. L'information géométrique est liée à la configuration du capteur et comprend par exemple la résolution pixel, la focale, ou encore l'ouverture du champ de vision. L'information géométrique permet de créer l'information de prise de vue d'une trame à l'aide d'un tapis de référence comportant un modèle numérique de terrain, si elle n'est pas déjà présente dans la trame, ou d'en améliorer la précision quand elle existe.

Le serveur 25 comprend un calculateur 40 propre à enregistrer les vidéos 35 fournies par le drone dans le disque de stockage 30. Il est propre en outre à réaliser des opérations sur les vidéos 35 enregistrées.

Le calculateur 40 comporte un module 50 de sélection d'une date d'une trame 37, un module 55 de détermination d'un lieu d'une trame 37, et un module 60 de calcul d'une interprétabilité d'une trame 37.

Le module 50 de sélection de date d'une trame 37 est propre à sélectionner la date contenue dans une trame.

Le module 55 de détermination du lieu d'une trame est propre à déterminer un lieu pour trame vidéo 37 à partir de l'information de prise de vue et/ou de l'information géométrique de la trame 37.

Le module 60 de calcul d'une interprétabilité de la trame implémente une fonction autonome de calcul de l'interprétabilité.

L'interprétabilité d'une trame est définie comme étant la capacité de l'image à fournir une information exploitable pour un besoin prédéfini. Une interprétabilité est définie pour chaque trame et choisie parmi une plage de valeurs. Par exemple, on utilise l'échelle NIIRS (National Imagery Interpretability Scale) c'est-à-dire l'« échelle nationale d'interprétabilité pour l'imagerie ». Cette échelle contient 13 niveaux différents, depuis le niveau 2 pour une trame très difficile à interpréter jusqu'au niveau 14 pour une séquence vidéo de très bonne qualité et dont l'interprétation est aisée.

La fonction autonome de calcul d'interprétabilité est propre à calculer une interprétabilité pour une trame 37 de séquence vidéo 35 à partir d'indices radiométriques et géométriques des trames de la séquence vidéo 35. Les indices radiométriques sont, par exemple, la luminance, le contraste, le bruit radiométrique de la trame. Les indices géométriques sont extraits à partir de l'information géométrique d'une trame et sont l'échelle ou la résolution dans l'image, l'inclinaison de la ligne de visée, la vitesse du centre image. Les indices géométriques sont évalués à partir d'un tapis de référence comportant un modèle numérique de terrain.

Le centre de données 20 comporte une base 61 de stockage, pour chaque trame 37 d'une vidéo 35, d'une interprétabilité calculée.

Le module 60 est relié à un module 62 de recalcul de la fonction autonome de calcul, à partir des informations contenues dans la base 61 de stockage et notamment des interprétabilités.

Les paramètres à prendre en compte pour obtenir une fonction de calcul de l'interprétabilité sont décrits par exemple dans le document MISB ST 0901 Video NIIRS (27 fevrier 2014).

Le serveur 25 comporte en outre un référentiel de métadonnées 63 comportant des fichiers de métadonnées 64. Chaque fichier 64 du référentiel est associé à une vidéo 35. Les fichiers de métadonnées 64 sont propres à structurer les données qu'ils contiennent, par exemple les fichiers de métadonnées 64 sont en format JSON.

Chaque fichier de métadonnées 64 est propre à une vidéo 35 et comporte, pour chaque trame 37 de la vidéo, des informations de recherche de trame vidéo 37, c'est-à-dire, la date de la trame vidéo, le lieu de la trame vidéo et l'interprétabilité de la trame vidéo.

Le lieu d'une trame 37 est un vecteur de coordonnées, calculé par le module 55 de détermination du lieu d'une séquence vidéo.

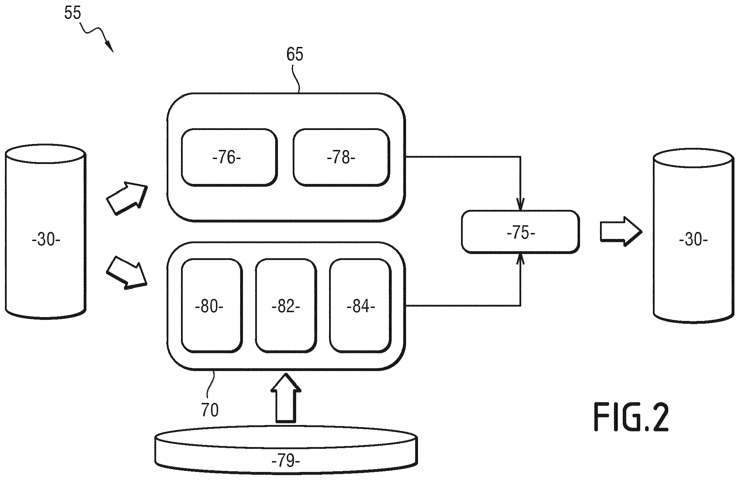

En référence à la figure 2, le module 55 de détermination du lieu d'une trame vidéo est décrit plus précisément.

Le module 55 de détermination du lieu d'une trame vidéo comprend un sous-module d'aérotriangulation 65 et un sous-module 70 de génération de points d'appui propres à réaliser un traitement complémentaire de l'information de prise de vue d'une même vidéo 35. Il comprend en outre un module de basculement 75 propre à combiner les traitements issus des sous-modules 70 et 75, effectués pour améliorer l'information de prise de vue et/ou de lieu des trames d'une vidéo.

Le sous-module d'aérotriangulation 65 est propre à déterminer les positions des trames 37 d'une séquence vidéo 35 « en relatif », c'est-à-dire déterminer les positions relatives des trames 37 les unes par rapport aux autres. Pour cela, le sous-module d'aérotriangulation comprend un calculateur 76 implémentant un algorithme de type KLT permettant de suivre la trajectoire de points de liaison extraits des trames 37 au cours de la séquence vidéo 35.

Le sous-module d'aérotriangulation 65 comprend en outre un calculateur 78 propre à calculer une information de prise de vue affinée pour chaque trame 37 à partir de l'information de prise de vue de la trame, et des positions relatives entre les trames. Ce calcul d'une information de prise de vue affinée est par exemple réalisé par un algorithme d'ajustement du faisceau (ou Bundle Adjustment) permettant de reconstruire une structure en trois dimensions à partir d'une succession de trames. L'algorithme d'ajustement du faisceau est basé par exemple l'algorithme de Levenberg-Marquardt. Le calcul d'aérotriangulation est réalisé dans un repère lié à la géolocalisation de la vidéo, appelé « repère monde ».

Le sous-module 70 de génération de points d'appui est relié à une base de données contenant un tapis de référence 79 comprenant un modèle de terrain et un ensemble d'images géolocalisées.

Le tapis de référence 79 est du type Géobase Défense (IGN, Institut Géographique National) ou bien par exemple de type Reference 3D. L'ensemble d'images géolocalisées du tapis de référence 79 contient des images dans lesquelles la position de tous les pixels est connue par leur position géographique dans un repère terrain lié au tapis de référence 79, ainsi que par leur précision. L'ensemble de ces images géolocalisées permet par exemple de recaler une image donnée par mise en correspondance des pixels. L'opération de recalage consiste à recalculer l'information géographique et la précision des pixels de l'image à recaler à partir des positions des pixels dans l'ensemble des images géolocalisées du tapis de référence 79.

Le sous-module 70 comporte une unité de sélection 80 propre à sélectionner des trames clés (ou « key frames »). Le sous-module 70 comporte en outre une unité 82 de recalage des trames clés propre à calculer une information de prise de vue améliorée des trames clés à partir du tapis de référence 79.

L'unité 82 de recalage utilise un algorithme dit de « descente de simplex » pour maximiser l'information mutuelle entre les trames clés et les images géolocalisées de l'ensemble d'images du tapis de référence 79.

Enfin, le sous-module 70 comprend une unité 84 de sélection de points d'appui, propre à extraire des points d'appui à partir des trames clés recalées par l'unité de recalage 82. Les points d'appui sont des points dont les coordonnées sont connues à la fois dans la vidéo 35 et dans le tapis de référence 79. Ils sont extraits à partir des pixels des images géolocalisées de l'ensemble d'images du tapis de référence 79. Les coordonnées des points d'appui extraits sont connues dans le repère lié au tapis de référence 79, appelé « repère terrain ».

Le sous-module de basculement 75 est propre à rechercher les points d'appui calculés par le sous-module 70, dans les trames traitées par le module 65.

Le sous-module de basculement 75 est en outre propre à déterminer une fonction de basculement en comparant les coordonnées des points d'appui dans le repère terrain, avec les coordonnées des même points d'appui dans le repère monde pour les trames clés.

Le sous-module 75 est enfin propre à appliquer cette fonction à l'information de prise de vue d'une trame pour calculer pour chaque trame 37 une information de prise de vue améliorée.

En référence à la figure 1, le terminal d'interrogation 32 comprend une interface 86 et un moteur de recherche 88.

L'interface 86 est propre à afficher des séquences vidéos obtenues à partir de recherches réalisées par le moteur de recherche 88 et portant sur des vidéos 35 contenues dans le disque de stockage 30 du centre de données 20.

Une séquence vidéo est formée d'au moins une trame extraite d'une vidéo 35.

Le moteur de recherche 88 comprend une interface de saisie par l'opérateur 33 des requêtes comportant des critères portant sur au moins l'un et avantageusement tous de la date, le lieu et l'interprétabilité.

Il est propre à assurer la recherche dans le référentiel 63 de fichiers de métadonnées, des fichiers de métadonnées 64 contenant des données satisfaisant les critères. Il est également propre à assurer le transfert depuis le disque de stockage 30 vers le terminal d'interrogation 32 des séquences vidéo formées de trames satisfaisant aux critères de recherche.

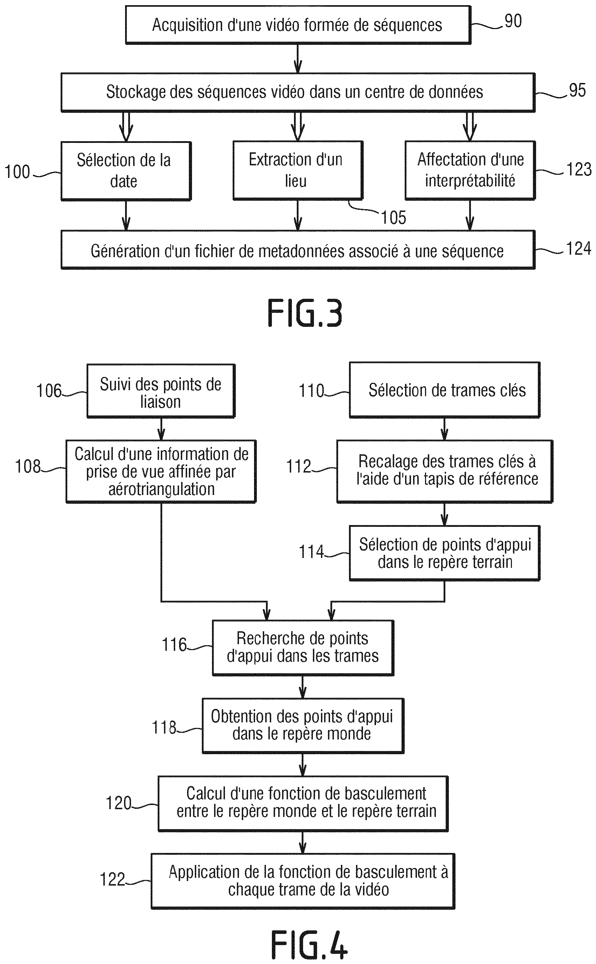

En référence à la figure 3, le procédé d'indexation d'une vidéo va maintenant être décrit.

Au cours d'une étape d'acquisition 90, le porteur mobile 10 acquiert, au moyen de sa caméra, des vidéos d'une scène. Au cours de toute sa phase de vol, les vidéos 35 acquises par le porteur mobile sont enrichies d'informations comme la date et l'information de prise de vue et l'information géométrique. Ensuite, les vidéos acquises par le porteur mobile sont sauvegardées par exemple dans un format de type STANAG 4609 dans un disque de stockage 30 du centre de données 20 lors d'une étape de stockage 95.

Le procédé d'indexation des vidéos s'applique alors à chaque trame 37 d'une vidéo 35. Les étapes suivantes sont mises en œuvre vidéo par vidéo.

Lors d'une étape de sélection 100, le module 50 sélectionne la date de chaque trame.

En référence à la figure 4, l'étape 105 d'extraction par le module 55 du lieu des trames 37 de la vidéo 35 va maintenant être décrite.

Lors d'une étape 106, le module 76 détermine pour chaque trame 37 de la vidéo, les coordonnées de points de liaison, afin de déterminer les positions relatives des trames les unes par rapport aux autres par suivi de la trajectoire des mêmes points de liaison d'une trame à l'autre. Les points de liaison sont déterminés automatiquement par l'algorithme KLT mis en œuvre par le module 76. Dans cette étape, les coordonnées des points d'une trame sont définies dans un repère lié à la vidéo, appelé « repère monde ».

Ensuite, dans une étape 108, le module d'aérotriangulation 78 calcule une information de prise de vue affinée pour chaque trame, à partir des positions relatives des trames et de l'information de prise de vue de la trame.

Lors d'une étape 110, le module 80 sélectionne des trames clés. Les trames clés sont choisies subjectivement en fonction de leur contenu. Le nombre de trames clés à sélectionner dépend de la longueur de la séquence et de la redondance des trames de la vidéo.

Ces trames clés sont recalées par rapport à l'ensemble d'images géolocalisées du tapis de référence 79 lors d'une étape 112 qui recalcule, pour les seules trames clés, une information de prise de vue améliorée dans un repère de terrain à partir de l'information de prise de vue de la trame par comparaison du contenu de la trame et des images géolocalisées de l'ensemble d'images géolocalisées du tapis de référence 79 indépendant de la vidéo référencée. A cet effet, les informations de prise de vue sont recalculées à partir de la comparaison du contenu des trames et du contenu des images géolocalisées de l'ensemble d'images du tapis de référence 79. Les informations de prise de vue recalculées sont choisies, comme connu en soi, pour maximiser l'information mutuelle entre les trames clés et les images géolocalisées par mise en œuvre d'un algorithme dit de « descente de simplex ».

Enfin, lors d'une étape 114, des points d'appuis *P*₁ ...*Pₙ* sont sélectionnés dans les trames clés. Les coordonnées *C*_{1,*i*} ...*C_{n,i}* des points d'appui sont évaluées dans chaque trame clé *Tᵢ*. Ici *C*_{1,*i*} définit les coordonnées du point d'appui *P*₁ dans la trame clé *Tᵢ* de la vidéo, dans le repère terrain lié au tapis de référence 79.

Au cours d'une étape 116, le module de basculement 75 recherche les points d'appui *P***₁** ...*Pₙ* dans les trames traitées par l'étape d'aérotriangulation 108.

Cette étape permet, lors d'une étape 118 de déterminer pour la trame clé *Tᵢ*, les coordonnées *C*'_{1,*i*} ...*C'_{n,i}* des points d'appui *P*₁ ...*Pₙ*, dans le repère monde lié à la vidéo traitée par l'étape d'aérotriangulation 108.

Lors d'une étape 120, le module de basculement réalise une comparaison des coordonnées *C*_{1,*i*} ... *C_{n,i}* et *C'*_{1,*i*} ...*C*'*_{n,i}* pour déterminer une fonction de basculement.

La fonction de basculement est une transformation géométrique, par exemple une similitude, permettant de réaliser un changement de repère entre le repère monde lié à la géolocalisation relative de la vidéo et le repère terrain lié au tapis de référence 79.

La fonction de basculement est telle que pour les trames clés, l'image de l'information de prise de vue dans le repère monde par la fonction de basculement est l'information de prise de vue dans le repère terrain. Elle est obtenue à partir de la reconnaissance et de la connaissance des coordonnées des points d'appui sur les images clés dans le repère monde et dans le repère terrain.

Lors d'une étape 122, le module de basculement applique cette fonction de basculement à l'ensemble des informations de prise de vue des trames 37 de la vidéo 35 pour calculer une information de prise de vue finale. Pour les images clés, les informations de prise de vue finale sont les informations de prise de vue améliorées. Elles sont calculées à partir de la fonction de basculement pour les trames qui ne sont pas clés.

Le lieu d'une trame 37 est calculé à partir de cette information de prise de vue finale.

En référence à la figure 2, le module de calcul 60 dans une étape d'affectation 123, calcule une fonction d'évaluation autonome de l'interprétabilité. La valeur d'interprétabilité calculée par cette fonction autonome est enregistrée dans la base de stockage 61, qui contient également éventuellement pour chaque trame des valeurs d'interprétabilité perçue, saisies par l'opérateur 33.

La date, le lieu, et l'interprétabilité obtenus au cours des étapes 100, 105 et 123 sont transmis en entrée du référentiel de métadonnées 63, qui, au cours de l'étape 124, crée, pour chaque séquence vidéo, un fichier de métadonnées 64 comportant la date, le lieu et l'interprétabilité de chaque trame. Les fichiers 64 sont configurés pour être interrogés par une requête portant sur un ou plusieurs critères portant sur la date, le lieu et l'interprétabilité.

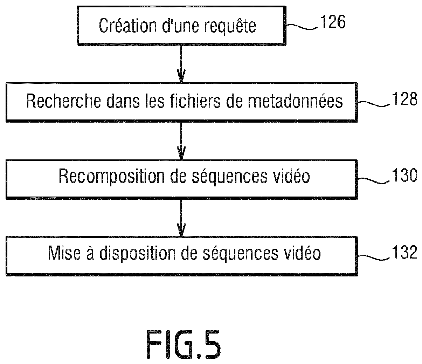

En référence à la figure 5, le procédé de recherche va maintenant être décrit.

Au cours d'une étape de création 126, l'opérateur 33 saisit une requête dans le moteur de recherche 88 du terminal d'interrogation 32 pour interroger les données contenues dans le disque de stockage 30 du centre de données 20. La requête comprend des critères portant sur la date, le lieu et l'interprétabilité. Lorsqu'il soumet sa requête, une étape de recherche 128 est réalisée dans les fichiers de métadonnées 64 des vidéos 35 pour trouver les trames 37 satisfaisant les critères renseignés.

Les trames 37 satisfaisant les critères de recherche sont ensuite sélectionnées, et recomposées pour former des séquences vidéo au cours d'une étape de recomposition 130 de séquence vidéo. L'étape de recomposition fait appel à des pointeurs informatiques pour déterminer si deux trames 37 obtenues au cours de l'étape de recherche se succèdent temporellement dans une vidéo 35. La séquence vidéo recomposée est une vidéo formée de trames satisfaisant les critères de recherche à l'étape de recherche 128 et qui se succèdent dans la vidéo 35 dont elles sont issues. Dans le cas d'une trame isolée, c'est-à-dire sans trame précédente ou suivante, la séquence vidéo se réduira alors à cette seule trame isolée.

Les séquences vidéo formées au cours de l'étape de recomposition 130 sont ensuite, lors d'une étape de mise à disposition 132, affichées au niveau de l'interface 86 après transmission sur le réseau 34.

Suite à l'étape de mise à disposition 130, avantageusement l'opérateur 33 saisit depuis le terminal d'interrogation 32 la valeur d'interprétabilité telle qu'il la perçoit, pour chaque trame 37 de la séquence mise à disposition. La valeur saisie est transmise par le réseau 34 à la base de stockage 61 et affectée à la séquence vidéo correspondante.

Le module de recalcul 62, sélectionne dans la base de stockage 61 les valeurs d'interprétabilité perçue pour les trames et recalcule la fonction d'évaluation du module 60 à partir d'une comparaison effectuée entre les valeurs sélectionnées d'interprétabilité perçue et les valeurs d'interprétabilité calculées obtenues par la fonction autonome. A partir de la fonction d'évaluation recalculée, une valeur tenant compte des interprétabilités saisies par l'opérateur 33 est recalculée. Elle est appliquée pour recalculer les interprétabilités calculées de toutes trames.

Selon une variante, le terminal d'interrogation comporte un module de combinaison de trames propre à combiner les trames d'au moins deux séquences vidéo transmises par le réseau 34 depuis le disque de stockage 30. Lors de l'étape de mise à disposition, le module de combinaison combine une sous-sélection des trames des séquences vidéo mises à disposition et génère des objets de synthèse. Par exemple, la combinaison obtenue est une vidéo de synthèse combinant les trames correspondant à un lieu prédéfini sur une plage de date choisie. Selon un autre exemple, la combinaison obtenue consiste à combiner pour une date donnée, des trames correspondant à différents points de vue sur un lieu géographique donné pour former une scène 3D à partir d'un procédé de type stéréoscopie.

Un tel procédé d'indexation permet, grâce à la détermination du lieu de la trame, et au calcul précis de l'interprétabilité, des requêtes sur des données affinées.

Un tel procédé d'indexation permet l'obtention rapide des seuls résultats pertinents depuis le client léger, ce qui représente un gain de temps et de bande passante important dans un contexte de massification des données.

Un tel procédé permet, grâce au calcul de l'interprétabilité de ne sélectionner que des images pertinentes en vue d'une analyse.

Un tel procédé permet, grâce à la possibilité de combiner les critères de date, lieu, interprétabilité, de mener une recherche très efficace dans les vidéos.

## Revendications

1. Procédé d'indexation d'une vidéo prise depuis une caméra mobile et stockée sur un disque de stockage (30), la vidéo étant formée d'une collection de trames (37) comprenant chacune une date et une information de prise de vue, le procédé mis en œuvre par un serveur (25) comprenant pour chaque trame (37) :
- une étape (100) de sélection de la date de la trame (37) par un module (50) de sélection d'un calculateur (40) du serveur (25) ;
- une étape (105) d'extraction d'un lieu de la trame à partir de l'information de prise de vue de la trame (37) par un module (55) de détermination du calculateur (40) du serveur (25) ;
- une étape (123) d'affectation d'une interprétabilité à la trame (37) par un module (60) de calcul d'une interprétabilité du calculateur (40) du serveur (25), l'interprétabilité d'une trame étant définie pour chaque trame, étant calculée par une fonction autonome de calcul à partir d'indices radiométriques et géométriques de la trame et étant une valeur parmi une plage de valeurs ; et
- pour l'indexation de la vidéo, une étape (124) de génération d'un fichier de métadonnées (64) distinct de la vidéo, comprenant pour chacune des trames de la vidéo, la date, le lieu et l'interprétabilité de la trame (37), et étant configuré pour être interrogé par une requête comprenant au moins un critère portant sur au moins l'un de la date, le lieu et l'interprétabilité.

2. Procédé selon la revendication 1, dans lequel l'étape (105) d'extraction du lieu comprend :
- une sous-étape (106) de détermination des positions relatives des trames (37) les unes par rapport aux autres par suivi de la trajectoire de points de liaison des trames ; et
- une sous-étape (108) de recalcul des informations de prise de vue affinées de chacune des trames (37) dans un repère monde, à partir des positions relatives des trames (37) entre elles et des informations de prise de vue de chaque trame (37).

3. Procédé selon la revendication 1 ou 2, dans lequel l'étape (105) d'extraction du lieu comprend :
- la sélection (110) éventuelle de la trame (37) en tant que trame clé et si la trame (37) est une trame clé :
- une sous-étape de sélection de l'information de prise de vue de la trame (37) clé ; et
- une sous-étape (112) de recalcul d'une information de prise de vue améliorée dans un repère de terrain à partir de l'information de prise de vue de la trame (37) par comparaison du contenu de la trame (37) et d'un ensemble d'images géolocalisées issu d'un tapis de référence (79) indépendant de la vidéo référencée.

4. Procédé selon les revendications 2 et 3 prises ensemble, dans lequel l'étape (105) d'extraction du lieu comprend :
- une sous étape (114) d'identification de points d'appui dans les trames clés de la vidéo ;
- une sous étape (114) de recherche des coordonnées, dans un repère terrain, des points d'appui des trames clés ayant une information de prise de vue améliorée ;
- une sous étape (118) de recherche des coordonnées, dans le repère monde, des points d'appui des trames clés ayant une information de prise de vue améliorée ;
- une sous étape (120) de calcul d'une fonction de basculement à partir des coordonnées des points d'appui des trames clés dans le repère terrain et dans le repère monde ; et
- une sous étape (122) de détermination du lieu dans un repère terrain à partir d'informations de prise de vue finales obtenues par application de la fonction de basculement aux informations de prise de vue affinées.

5. Procédé selon l'une quelconque des revendications précédentes, dans lequel l'étape (123) d'affectation de l'interprétabilité des trames comprend une sous-étape de calcul d'une fonction d'évaluation de l'interprétabilité, la fonction s'appliquant à des indices radiométriques et géométriques des trames de la vidéo.

6. Procédé selon la revendication 5, dans lequel l'étape (123) d'affectation de l'interprétabilité comprend en outre :
- une sous-étape de collecte d'au moins une interprétabilité perçue, saisie par au moins un opérateur (33), et
- une sous-étape de recalcul de la fonction d'évaluation à partir de la fonction calculée par la sous-étape de calcul, et d'au moins une interprétabilité perçue par au moins un opérateur (33) pour au moins une séquence vidéo.

7. Procédé de recherche de séquences vidéo contenues dans des vidéos, les vidéos étant indexées selon le procédé de l'une quelconque des revendications précédentes, le procédé de recherche comprenant :
- une étape de création (120) d'une requête comprenant au moins un critère portant sur au moins l'un de la date, le lieu et l'interprétabilité ;
- une étape de recherche (125) dans les fichiers de métadonnées (64) associés à la vidéo, des trames (37) de la vidéo satisfaisant le ou chaque critère, et
- une étape de mise à disposition (130) d'au moins une ou plusieurs séquences vidéo reconstituées chacune à partir de trames contigües temporellement satisfaisant le ou chaque critère au cours de l'étape de recherche.

8. Procédé de recherche selon la revendication 7, comportant en outre une étape de mise à disposition d'au moins une combinaison d'au moins deux séquences vidéo reconstituées.

9. Produit programme d'ordinateur comportant des instructions logicielles qui, lorsqu'elles sont mises en œuvre par un calculateur, mettent en œuvre le procédé selon l'une quelconque des revendications précédentes.

## Patentansprüche

1. Verfahren zur Indexierung eines Videos, das von einer mobilen Kamera aufgenommen und auf einer Speicherplatte (30) gespeichert ist, wobei das Video aus einer Sammlung von Frames (37) gebildet wird, die jeweils ein Datum und Aufnahmeinformationen umfassen, das von einem Server (25) implementierte Verfahren umfassend für jedes Frame (37):
- einen Schritt (100) eines Auswählens des Datums des Frames (37) durch ein Auswahlmodul (50) eines Rechners (40) des Servers (25);
- einen Schritt (105) eines Extrahierens eines Orts des Frames anhand von Aufnahmeinformationen des Frames (37) durch ein Bestimmungsmodul (55) des Rechners (40) des Servers (25);
- einen Schritt (123) eines Zuordnens einer Interpretierbarkeit zu dem Frame (37) durch ein Interpretierbarkeit-Berechnungsmodul (60) des Rechners (40) des Servers (25), wobei die Interpretierbarkeit eines Frames für jedes Frame definiert ist, durch eine autonome Rechenfunktion aus radiometrischen und geometrischen Indizien des Frames berechnet wird und ein Wert aus einem Wertebereich ist; und
- für die Indexierung des Videos, einen Schritt (124) zur Erzeugung einer von dem Video getrennten Metadatendatei (64), umfassend für jedes der Frames des Videos das Datum, den Ort und die Interpretierbarkeit des Frames (37) und der konfiguriert ist, um durch eine Anfrage abgefragt zu werden, die mindestens ein Kriterium umfasst, das sich auf mindestens eines von Datum, Ort und Interpretierbarkeit bezieht.

2. Verfahren nach Anspruch 1, wobei der Schritt (105) eines Extrahierens des Orts Folgendes umfasst:
- einen Unterschritt (106) zum Bestimmen von relativen Positionen der Frames (37) untereinander durch Verfolgen des Wegs von Verbindungspunkten der Frames; und
- einen Unterschritt (108) eines Neuberechnens von verfeinerten Aufnahmeinformationen von jedem der Frames (37) in einem Welt-Koordinatensystem anhand von relativen Positionen der Frames (37) zueinander und von Aufnahmeinformationen von jedem Frame (37).

3. Verfahren nach Anspruch 1 oder 2, wobei der Schritt (105) eines Extrahierens des Orts Folgendes umfasst:
- die mögliche Auswahl (110) des Frames (37) als Schlüssel-Frame und wenn das Frame (37) ein Schlüssel-Frame ist:
- einen Unterschritt eines Auswählens von Bildaufnahmeinformationen des Schlüssel-Frames (37); und
- einen Unterschritt (112) eines Neuberechnens von verbesserten Aufnahmeinformationen in einem Geländekoordinatensystem anhand von Aufnahmeinformationen des Frames (37) durch Vergleich des Inhalts des Frames (37) und eines Satzes von georeferenzierten Bildern aus einer Referenzmatte (79), die unabhängig von dem referenzierten Video ist.

4. Verfahren nach den Ansprüchen 2 und 3 zusammen genommen, wobei der Schritt (105) eines Extrahierens des Orts Folgendes umfasst:
- einen Unterschritt (114) zum Identifizieren von Unterstützungspunkten in den Schlüssel-Frames des Videos;
- einen Unterschritt (114) eines Suchens von Koordinaten, in einem Geländekoordinatensystem, von Unterstützungspunkten der Schlüssel-Frames, die verbesserte Bildaufnahmeinformationen aufweisen;
- einen Unterschritt (118) eines Suchens von Koordinaten, in einem Welt-Koordinatensystem, von Unterstützungspunkten der Schlüssel-Frames, die verbesserte Bildaufnahmeinformationen aufweisen;
- einen Unterschritt (120) eines Berechnens einer Umschaltfunktion anhand von Koordinaten von Unterstützungspunkten der Schlüssel-Frames in dem Geländekoordinatensystem und in dem Welt-Koordinatensystem; und
- einen Unterschritt (122) eines Bestimmens des Orts in einem Geländekoordinatensystem anhand von endgültigen Bildaufnahmeinformationen, die durch Anwendung der Umschaltfunktion auf die verfeinerten Bildaufnahmeinformationen erlangt werden.

5. Verfahren nach einem der vorherigen Ansprüche, wobei der Schritt (123) eines Zuordnens der Interpretierbarkeit von Frames einen Unterschritt eines Berechnens einer Funktion zur Bewertung der Interpretierbarkeit umfasst, wobei die Funktion auf radiometrische und geometrische Indizien der Frames des Videos angewendet wird.

6. Verfahren nach Anspruch 5, wobei der Schritt (123) eines Zuordnens der Interpretierbarkeit ferner Folgendes umfasst:
- einen Unterschritt eines Sammelns von mindestens einer wahrgenommenen Interpretierbarkeit, die von mindestens einem Bediener (33) erfasst wird, und
- einen Unterschritt des Neuberechnens der Bewertungsfunktion anhand der durch den Berechnungsunterschritt berechneten Funktion und mindestens einer durch mindestens einen Bediener (33) wahrgenommenen Interpretierbarkeit für mindestens eine Videosequenz.

7. Verfahren zum Suchen von Videosequenzen, die in Videos enthalten sind, wobei die Videos nach dem Verfahren eines der vorherigen Ansprüche indexiert werden, das Suchverfahren umfassend:
- einen Schritt eines Erstellens (120) einer Abfrage, umfassend mindestens ein Kriterium, das sich auf mindestens eines von Datum, Ort und Interpretierbarkeit bezieht;
- einen Schritt eines Suchens (125) in Metadatendateien (64), die mit dem Video assoziiert sind, nach Frames (37) des Videos, die das oder jedes Kriterium erfüllen, und
- einen Schritt eines Bereitstellens (130) von mindestens einer oder mehreren Videosequenzen, die jeweils anhand von zeitlich zusammenhängenden Frames rekonstruiert werden, die das oder jedes Kriterium während des Suchschritts erfüllen.

8. Suchverfahren nach Anspruch 7, ferner umfassend einen Schritt eines Bereitstellens von mindestens einer Kombination aus mindestens zwei rekonstruierten Videosequenzen.

9. Computerprogrammprodukt, umfassend Softwareanweisungen, die, wenn sie von einem Rechner umgesetzt werden, das Verfahren nach einem der vorherigen Ansprüche umsetzen.

## Claims

1. Method of indexing a video taken with a mobile camera and stored on a storage disk (30), wherein the video is formed of a collection of frames (37) each comprising a date and shooting information, wherein the method implemented by a server (25) comprises for each frame (37):
- a step (100) for selecting the date of the frame (37) by a selection module (50) of a computer (40) of the server (25);
- a step (105) for extracting a location of the frame from the shooting information of the frame (37) by a determining module (55) of the computer (40) of the server (25);
- a step (123) for assigning interpretability to the frame (37) by an interpretability calculation module (60) of the computer (40) of the server (25), the interpretability of a frame being defined for each frame, being calculated by an autonomous calculating function from radiometric and geometric indices of the frame and being a value from a range of values; and
- for indexing the video, a step (124) for generating a metadata file (64) separate from the video, comprising for each frame of the video, the date, the location and the interpretability of the frame (37), and wherein it is designed to be interrogated by a query comprising at least one criterion, i.e. at least the date, location or interpretability.

2. Method according to claim 1, wherein the step (105) for extraction of the location comprises:
- a substep (106) for determining the relative positions of the frames (37) with respect to one another by tracking the path of the frame link points; and
- a sub-step (108) for recalculating the fine-tuned image information of each of the frames (37) in a world coordinate system, based on the relative positions of the frames (37) with respect to each other and the shooting information of each frame (37).

3. Method according to claim 1 or 2, wherein the step (105) for extracting the location comprises:
- the selection (110) of the frame (37) as a key frame and, if the frame (37) is a key frame,:
- a substep of selecting the shooting information of the key frame (37); and
- a sub-step (112) of recalculating an enhanced image information in a terrain coordinate system from the image information of the frame (37) by comparing the content of the frame (37) and a set of geotagged images from a reference mat (79) independent of the referenced video.

4. Method according to claims 2 and 3 taken together, wherein the step (105) for extracting the location comprises:
- a sub-step (114) for identifying support points in the key frames of the video;
- a sub-step (114) for searching the coordinates, in a terrain coordinate system, of the support points of the key frames having enhanced shooting information;
- a substep (118) for finding the coordinates, in the world terrain coordinate system, of the support points of the key frames having enhanced shooting information;
- a substep (120) for calculating a failover function based on the coordinates of the support points of the key frames in the terrain coordinate system and in the world coordinate system; and
- a sub-step (122) for determining the location in a terrain coordinate system from final shooting information obtained by applying the failover function to the fine-tuned shooting information.

5. Method according to any one of the preceding claims, wherein the frame interpreting assignment step (123) comprises a substep of calculating an interpretability evaluation function, wherein this function applies to radiometric and geometric indices of video frames.

6. Method according to claim 5 wherein the step (123) of assigning the interpretability further comprises:
- a substep of collecting at least one perceived interpretability that is entered by at least one operator (33), and
- a sub-step of recalculating the evaluation function from the function calculated by the calculation sub-step, and at least one interpretability perceived by at least one operator (33) for at least one video sequence.

7. Method for searching video sequences contained in videos, wherein the videos are indexed according to the method of any one of the preceding claims, wherein the search method comprises:
- a step (120) for creating a query comprising at least one criterion relating to at least the date, the location or the interpretability;
- a search step (125) in the metadata files (64) associated with the video, for frames (37) of the video satisfying the,, or each criterion, and
- a step (130) of making accessible at least one or more video sequences respectively reconstituted from temporally-contiguous frames satisfying the, or each, criterion during the search step.

8. Search method according to claim 7, further comprising a step of providing at least one combination of at least two reconstituted video sequences.

9. Computer program product comprising software instructions which, when implemented by a computer, implement the method according to any one of the preceding claims.
